# EUROPEAN PATENT APPLICATION

(11) **EP 2 025 220 A1**
(43) Date of publication of application: **18.02.2009**
(21) Application number: 07114397.8
(22) Date of filing: 15.08.2007
(51) Int. Cl.: A01G 7/04, F21V 29/02, F21Y 101/02

(54) **LED lighting device for growing plants**

(71) Applicant: Lemnis Lighting Patent Holding B.V., 1411 KC Naarden (NL)
(72) Inventor: Rooymans, Johannes Otto, 3853 NR Ermelo (NL); Neeb, Taco Wijnand, 1394 PE Nederhorst den Berg (NL)
(74) Representative: Rasser, Jacobus Cornelis

(57) **Abstract**

Disclosed is a lighting assembly for growing plants. The lighting assembly comprises a first light source emitting light in a first wavelength range of 600 to 750 nm; a second light source emitting light in a second wavelength range of 375 to 500 nm; and a controller for controlling the output of the first light source independent from the out put of the second light source.

Disclosed are also an enclosure for growing plants, and a method for growing plants.

## Description

### BACKGROUND OF THE INVENTION

### 1. Field of the Invention

The invention relates generally to a lighting assembly for use in growing plants, to an enclosure for growing plants comprising a lighting assembly, and more particularly to a specific method for growing plants.

### 2. Description of the Related Art

Conventionally, greenhouses are provided with sodium or metal hydride lamps to provide growing light for plants on days that daylight entering the greenhouse is insufficient for optimal plant growth. The energy required for such lamps is a major cost factor in the growing of crops in greenhouses. The high energy consumption in most cases is associated with an undesirable burning of fossil fuels. In addition, the light escaping from the greenhouses is a major source of undesirable light pollution.

US Patent 6,921,182 to Anderson proposes a lamp comprising LEDs for facilitating plant growing. The lamp comprises a first set of orange LEDs having a peak wavelength emission of about 612 nm, and a second set of red LEDs having a peak wavelength of about 660 nm. In a preferred embodiment the lamp includes a third set of LEDs emitting blue light. The lamp of this reference is intended to provide the plants with their full lighting needs.

Thus, there is a need for a lighting assembly for use in growing plants that supplements daylight to which the plants are exposed. There is a further need to optimize the spectral distribution of the light provided to the plants complementing the daylight the plants receive.

### BRIEF SUMMARY OF THE INVENTION

The present invention addresses these problems by providing a lighting assembly for growing plants comprising:
a) a first light source emitting light predominantly in a first wavelength range of 600 to 750 nm;
b) a second light source emitting light predominantly in a second wavelength range of 375 to 500 nm;
c) a controller for controlling the output of the first light source independent from the output of the second light source.

Another aspect of the invention comprises a method for method for growing plants, said method comprising exposing the plants to daylight and to light emitted by a first light source predominantly in a wavelength range of from 500 to 600 nm.

Another aspect of the invention provides an enclosure for growing plants, said enclosure comprising:
a) transparent panels for admitting daylight into the enclosure;
b) a first light source provided inside the enclosure for supplementing the daylight admitted into the enclosure, said light source emitting light predominantly in a wavelength range of from 600 nm to 700 nm.

### BRIEF DESCRIPTION OF THE DRAWINGS

The features and advantages of the invention will be appreciated upon reference to the following drawings, in which:

FIG. 1 provides a comparison of the absorption spectrum of a green plant and the emission spectrum of a sodium lamp.

Figure 2 shows an idealized emission spectrum of an optimum growth light.

FIG. 3 shows the relative light output of a LED as a function of its junction temperature.

FIG. 4 shows the bridge circuit of a LED assembly of a preferred embodiment.

Figure 5 shows an arrangement of lighting assemblies in a greenhouse.

Figure 6 shows a grid of lighting assemblies suitable for a greenhouse.

Figure 7 shows the light intensity pattern produced with the grid of Figure 6.

### DESCRIPTION OF ILLUSTRATIVE EMBODIMENTS

Assimilation by plants is a process by which plants absorb CO₂ from air, and combine it with water to form carbohydrates. This is en endothermic reaction. Plants use energy from the sun for this reaction. The pigment chlorophyll is instrumental in converting light energy.

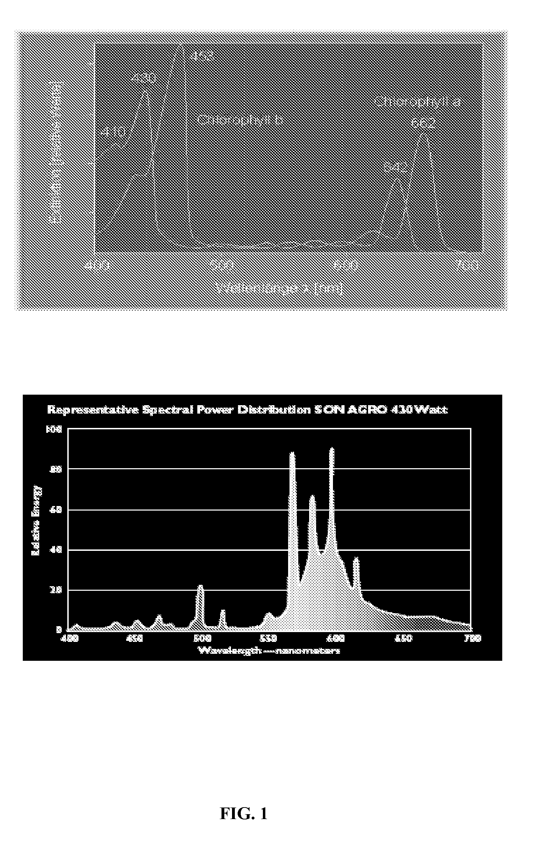

There are two main types of chlorophyll, chlorophyll a and chlorophyll b. The absorption maxima of chlorophyll a are *lambda*= 430 and *lambda*= 662 nm, that of chlorophyll b are at 453 and 642 nm. The absorption spectra are shown in Figure 1. It is clear that there is little or no absorption of light with wavelengths in the 500 to 600 nm range.

Also shown in Figure 1 is the emission spectrum of a representative high pressure sodium (HPS) plant growth lamp. The lion share of the energy is emitted at wavelengths between 500 and 600 nm, which is not usable by the chlorophyll in the plants.

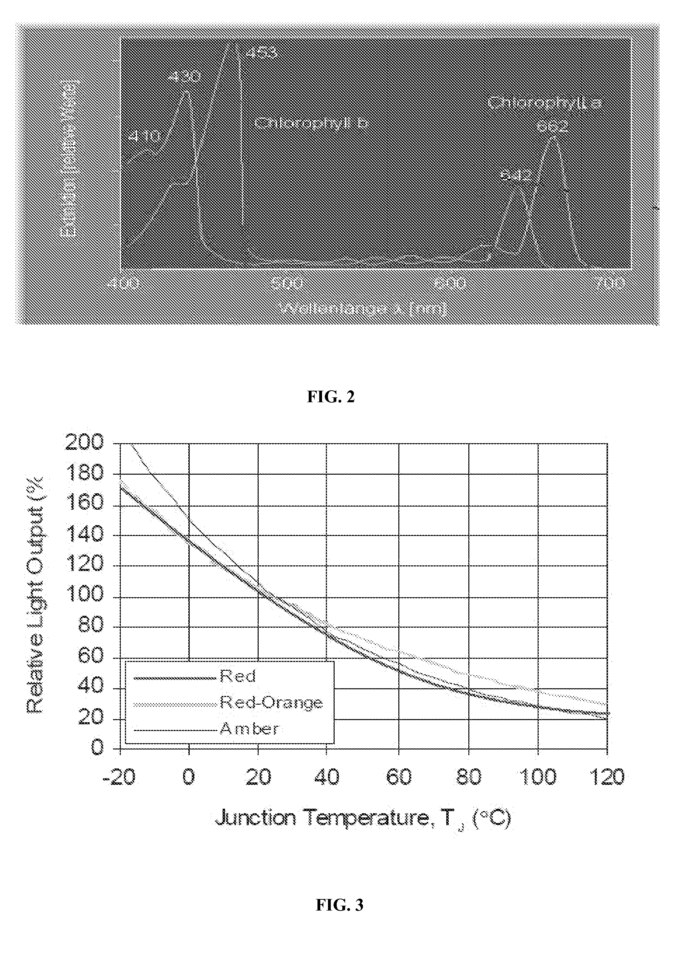

Generally PAR (photosynthetically active radiation) is considered all radiation in the 400 to 700 nm range. It is expressed in We/m² (Watts of light energy per square meter). Although generally used, this definition may lead to misleading results, as only a portion of this energy is usable by the plant. It were better to measure the Watts of light energy (per square meter) in the wavelength ranges of 400 to 470 nm and 630 to 690 nm, as depicted in Figure 2. This inventor has coined the term LEMPAR™ for this parameter. For many light sources the LEMPAR™ is about a third of the PAR.

It will be understood that the energy efficiency of a growth light can be improved by adjusting its emission spectrum so as to maximize its emission in the 400-470 nm and 620 to 690 nm ranges, so that PAR and LEMPAR™ approach equality.

The energy efficiency of a growth light can be improved further by providing a proper balance between its emission of "blue" light (400-470 nm) and its "red" light (620-690 nm). It has been discovered that the red light promotes plant growth, whereas the blue light slows down plant growth, but promotes the formation of firm branches and compact leaves. It is therefore important to adjust the amount of blue light. Too little blue light results in spindly plants; too much blue light stunts the growth of the plant.

In one aspect the invention provides a lighting assembly for growing plants comprising:
a) a first light source emitting light predominantly in a first wavelength range of 600 to 750 nm;
b) a second light source emitting light predominantly in a second wavelength range of 375 to 500 nm;
c) a controller for controlling the output of the first light source independent from the output of the second light source.

The independent control of the light outputs of the first light source and the second light source permits a proper balancing of the amount of blue light, consistent with the desired result. The optimum balance will depend the growth phase of the plant (germination, seedling, mature plant) and on the type of crop, for example, on whether the plant is grown for its leaves (spinach, lettuce, etc.), for its flowers (roses, chrysanthemums, etc.) or for its fruits (tomatoes, bell peppers, etc.).

Particularly suitable for the light sources of the lighting assembly are light sources comprising Light Emitting Diodes (LEDs). LEDs emit light in a relatively narrow wavelength range, which is an advantage in the present context.

Examples of suitable LEDs for use as the first light source include Gallium Phosphide (GaP), Gallium Arsenide (GaAs) and Aluminum Indium Gallium Phosphide (AlInGaP). The former two have their peak wavelengths near 660 nm, which is about optimum for chlorophyll a. AlInGaP has its peak below 645 nm, but its efficacy is much higher than that of GaP and GaAs. In many cases AlInGaP is therefore preferred.

Examples of suitable blue and near uv LEDs include Gallium Nitride (GaN) and Indium Gallium Nitride (InGaN) chips.

As shown in Figure 3, the light output of a LED is strongly dependent of the junction temperature. If the output at a junction temperature of 20 °C is put at 100, the output at a junction temperature of 60 °C is only about 50. The power consumption of the LED is about the same at both temperatures. For this reason it is desirable to cool the LED light source. Cooling is a unique feature of LED light sources. Traditional light sources, such as incandescent lamps and tube lights, require a high operating temperature for them to emit light. Cooling would be counterproductive (although of course the housing or fitting of such a light source may be cooled, and often is). In the case of LEDs, by contrast, it is advantageous to cool the light source itself, in particular the junction.

Any means for cooling the LED chip is suitable. Examples include means for circulating air or some other gas around the LED chip. A heat sink may be provided to further facilitate the cooling.

In a particular embodiment, the cooling means comprises a tube, and a cooling liquid flowing through the tube. It may be desirable to provide a transparent housing, for example a tube, tube so that the light source may be placed inside the housing.

As will be described in more detail below, the plant may be exposed to daylight, and the lighting assembly may be used to complement this daylight. In this application it is desirable to minimize the size of the lighting assembly, so as to minimize the amount of daylight that is blocked by it. Even transparent tubes block some daylight, and are therefore preferably kept small. The tube of the cooling means desirably has an external diameter of less than 5 cm, preferably less than 3 cm, more preferably less than 2 cm.

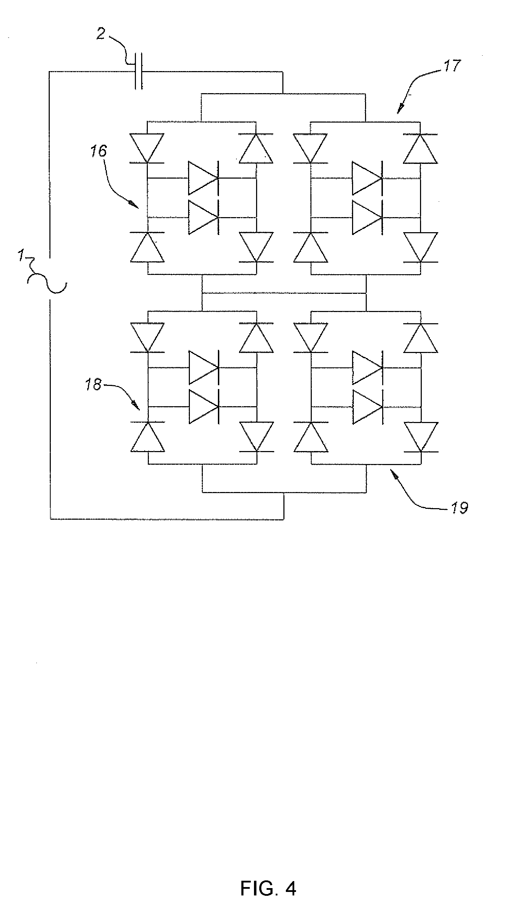

Figure 4 shows a bridge circuit comprising 8 diodes, all or some of which may be LEDs. This circuit offers several advantages. It permits the diodes to be connected to either a DC or an AC power supply. The voltage of the power supply may be much higher than the operating voltage of the LEDs. In fact, the circuit may be connected to the power mains, or to a power generator, without requiring a transformer or step-down circuitry. Another advantage of the circuitry is that, different from a circuit connecting LEDs in series, the circuit continues to produce light even if one of the LEDs fails.

In another aspect the invention relates to an enclosure for growing plants, said enclosure comprising:
a) transparent panels for admitting daylight into the enclosure;
b) a first light source provided inside the enclosure for supplementing the daylight admitted into the enclosure, said light source emitting light predominantly in a wavelength range of from 600 nm to 750 nm.

Examples of such an enclosure include greenhouses for growing decorative plants, food crops, or energy crops; enclosed stadiums with natural turf; atriums of office buildings and hotels, which may contain decorative plants, and the like. It will be understood that the term "enclosure" does not necessarily require a structure that is entirely closed, or that is entirely closed at all times. For example, greenhouses generally have windows that may be opened to provide ventilation and/or cooling. A stadium may have a retractable roof, which may be opened to allow air and light to enter.

In many cases the transparent panels will be made of glass, but other transparent materials may be used. It will be understood that the panels may be treated to reduce the transmission of infrared radiation, and even visible light. For example, the glass panels of a green house may be coated or white-washed so as to temper sunlight reaching the plants. The glass panels of an atrium may be tinted or otherwise treated to reduce the amount of uv light and/or visible light entering the building. For the purpose of this invention, the term "transparent" connotes the property of transmitting daylight. Accordingly, the term encompasses "translucent" and other, similar terms.

It will be understood also that the function of the transparent panels is to admit daylight to the enclosure. Accordingly, the term "transparent panel" also encompasses an opening, such as an open window or the opening left by the retracted roof of a stadium.

Under a wide variety of circumstances the daylight reaching plants present in the enclosure provides all of the plants' needs of blue light, as it has been found that plants in general require only modest amounts of blue light. In one embodiment, the enclosure contains just a red light source to complement the daylight.

In another embodiment the enclosure contains a second light source emitting light predominantly in a second wavelength range of 400 to 500 nm. If such a second light source is present, the enclosure may further comprise a controller for controlling the output of the second light source independent from the output of the first light source.

Either or both light sources may comprise at least one LED. Suitable red LEDs and blue LEDs are exemplified above. Preferred for use as the red LED is an AllnGaP chip. If LED light sources are used, it is desirable to provide a cooling means in order to optimize the light output of the LEDs, while at the same time increasing their useful life. Desirably the cooling means comprises a transparent tube, and a cooling fluid flowing through the transparent tube. Heat may be recovered from the cooling fluid, and recycled into the enclosure.

As in this embodiment of the invention daylight is an important component of the light admitted to the plants, it is desirable to minimize the amount of daylight blocked by the transparent tube. Accordingly, the external diameter desirably is less than 5 cm, preferably less than 3 cm, more preferably less than 2 cm.

The LEDs may be mutually connected in bridge circuits, such as shown in Figure 4.

It is commonly believed that the light source should be positioned as closely above the plants as possible, to ensure the greatest possible light intensity. Although this principle may be correct for a single light source or a single row of light sources, it is not valid for an enclosure comprising a two-dimensional arrangement of light sources.

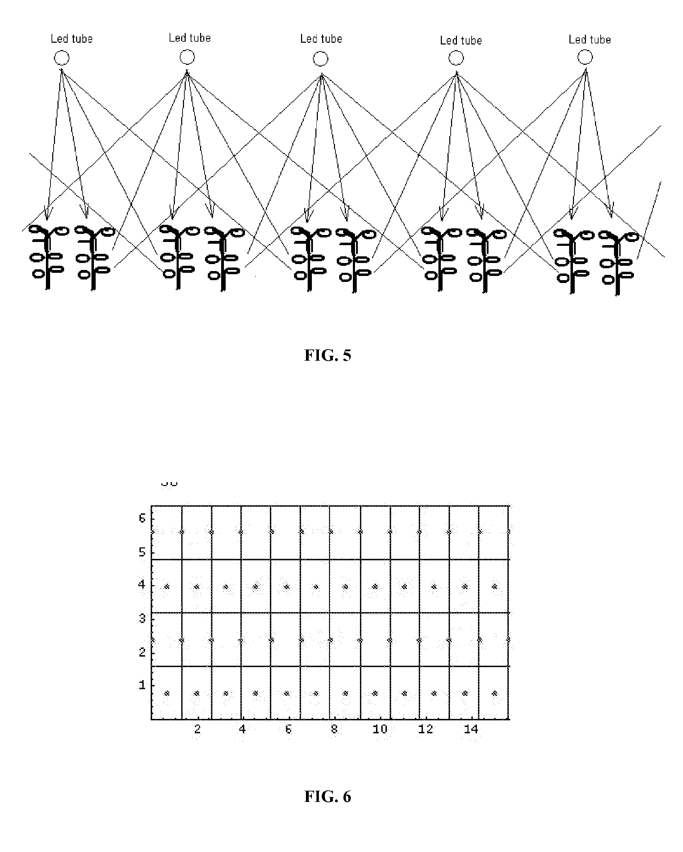

The light intensity decreases exponentially with the distance from the light assembly, not because of any losses, but because the light becomes spread across a greater surface as the distance from the lamp increases. If a two-dimensional grid of light assemblies is suspended over a two-dimensional grid of plants, each plant receives light from several light assemblies, and no light energy is lost if the distance from the light assembly grid to the plant grid is increased. This is illustrated in Figure 5.

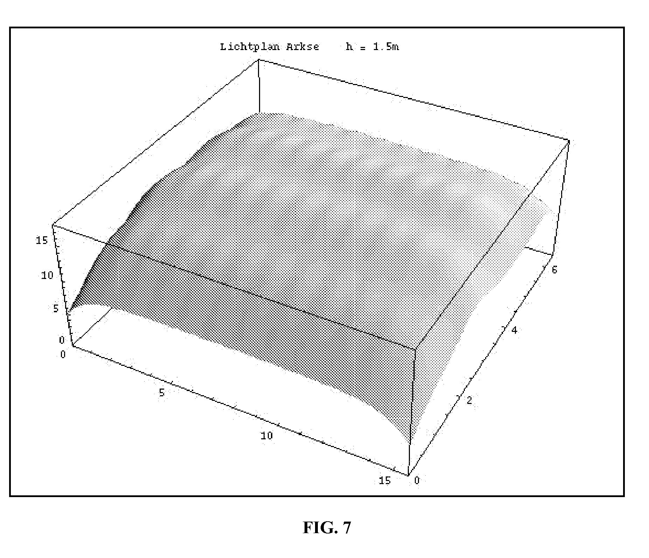

In one aspect, the invention relates to a grid of light assemblies suspended above a grid of plants at a distance of from 0.5 m to 10 m from the growth medium (a bed of soil, or rock wool, for example). Figure 6 shows an example if such a grid. Figure 7 shows the light intensity pattern produced with the grid of Figure 6.

Generally, conventional growth lamps, such as high pressure sodium (HPS) lamps are installed in an installation density such that more than 100 W/m² is emitted. The efficiency of the light assembly of the present invention is such that excellent results in terms of plant growth are obtained with emissions of from 15 to 40 W/m²_{.}

In another aspect the invention relates to a pond for growing aquatic plants, such as algae. Algae are known to have highly efficient photosynthesis processes, up to 10 or 20 times more efficient than land-based plants. In addition, algal biomass tends to be rich in protein and triglycerides, which makes it a very attractive crop for food or biodiesel.

However, light penetrates algae-containing water over only short distances. For this reason ponds for growing algae need to be shallow, requiring very large surface areas for growing algae in industrial quantities. The algae ponds of the present invention are provides with submerged light assemblies of the type described above. In particular the light assembly comprising LEDs in a transparent tube is suitable for use in algae ponds.

Owing to the submerged light assemblies the algae are not dependent on light entering from above the water. Accordingly, the pond does not need to be shallow and large, but can be of any convenient shape and dimension. For example, the pond may be rectangular, cubicle or cylindrical, and may have any desired diameter/depth ratio.

Desirably the water in the pond is agitated to ensure optimum contact of the algae with CO₂. A suitable method for agitating the water is bubbling air, CO₂- enriched air, or CO₂ through the water in the pond.

In yet another aspect the invention is a method of growing plants, said method comprising exposing the plants to daylight and to light emitted by a first light source predominantly in a wavelength range of from 600 to 750 nm.

In another embodiment, the method further comprises exposing the plants to light from a second light source emitting light predominantly in a wavelength range of from 375 to 500 nm.

In a preferred embodiment the method virtually avoids the use of artificial light in a wavelength range of from 500 to 600 nm.

Desirably, the first light source and the second light source each comprises at least one light emitting diode (LED).

The method may further comprise cooling at least one of the light sources.

In one embodiment of the method the cooling comprises providing a transparent tube surrounding the light source, and a cooling fluid flowing through the transparent tube. Desirably, the transparent tube has an external diameter of less than 5 cm, preferably less than 3 cm, more preferably less than 2 cm.

As explained above, the first light source may comprise an AllnGaP LED. The first light source comprises art least 8 LEDs mutually connected in a bridge circuit.

## Claims

1. A lighting assembly for growing plants comprising:
a) a first light source emitting light predominantly in a first wavelength range of 600 to 750 nm;
b) a second light source emitting light predominantly in a second wavelength range of 375 to 500 nm;
c) a controller for controlling the output of the first light source independent from the output of the second light source.

2. The lighting assembly of claim 1 wherein the first light source and the second light source each comprises at least one light emitting diode (LED).

3. The lighting assembly of claim 1 or 2 further comprising a means for cooling at least one of the light sources.

4. The lighting assembly of claim 3 wherein the means for cooling comprises a transparent tube surrounding the light source, and a cooling fluid flowing through the transparent tube.

5. The lighting assembly of claim 4 wherein the transparent tube has an external diameter of less than 5 cm, preferably less than 3 cm, more preferably less than 2 cm.

6. The lighting assembly of any one of the preceding claims wherein the first light source comprises an AllnGaP LED.

7. The lighting assembly of any one of the preceding claims wherein the first light source comprises art least 8 LEDs mutually connected in a bridge circuit.

8. An enclosure for growing plants, said enclosure comprising:
a) transparent panels for admitting daylight into the enclosure;
b) a first light source provided inside the enclosure for supplementing the daylight admitted into the enclosure, said light source emitting light predominantly in a wavelength range of from 600 nm to 750 nm.

9. The enclosure of claim 8 further comprising a second light source inside the enclosure, said second light source emitting light predominantly in a second wavelength range of 375 to 500 nm.

10. The enclosure of claim 9 further comprising a controller for controlling the output of the second light source independent from the output of the first light source.

11. The enclosure of any one of claims 8 through 10 further comprising a means for cooling at least the first light source.

12. The enclosure of claim 11 wherein the means for cooling comprises a transparent tube surrounding the light source, and a cooling fluid flowing through the transparent tube.

13. The enclosure of claim 12 wherein the transparent tube has an external diameter of less than 5 cm, preferably less than 3 cm, more preferably less than 2 cm.

14. The enclosure of any one of claims 8 through 13 wherein the first light source comprises an AllnGaP LED.

15. The enclosure of any one of claims 8 through 14 wherein the first light source comprises art least 8 LEDs mutually connected in a bridge circuit.

16. The enclosure of any one of claims 8 through 15 wherein a plurality of light assemblies is arranged in a two-dimensional grid.

17. The enclosure of claim 16 wherein the two-dimensional grid emits light having an energy density of from 15 to 40 W/m².

18. A pond for growing algae comprising water and a plurality of light assemblies according to any one of claims 1 through 7, said light assemblies being submerged in the water.

19. A method of growing plants, said method comprising exposing the plants to daylight and to light emitted by a first light source predominantly in a wavelength range of from 600 to 750 nm.

20. The method of claim 19 further comprising exposing the plants to light from a second light source emitting light predominantly in a wavelength range of from 375 to 500 nm.

21. The method of claim 20 wherein the first light source and the second light source each comprises at least one light emitting diode (LED).

22. The method of claim 21 further comprising cooling at least one of the light sources.

23. The method of claim 22 wherein the cooling comprises providing a transparent tube surrounding the light source, and a cooling fluid flowing through the transparent tube.

24. The method of claim 23 wherein the transparent tube has an external diameter of less than 5 cm, preferably less than 3 cm, more preferably less than 2 cm.

25. The method of any one of claims 19 through 24 wherein the first light source comprises an AllnGaP LED.

26. The method of any one of claims 19 through 25 wherein the first light source comprises at least 8 LEDs mutually connected in a bridge circuit.
